# NEUE EUROPÄISCHE PATENTSCHRIFT

(11) **EP 0 301 472 B2**
(45) Veröffentlichungstag und Bekanntmachung des Hinweises auf die Entscheidung über den Einspruch: **07.01.1998**
(45) Hinweis auf die Patenterteilung: 24.04.1991
(21) Anmeldenummer: 88112011.7
(22) Anmeldetag: 26.07.1988
(51) Int. Cl.: C22C 21/02, B60B 3/06

(54) **Herstell-Verfahren für Leichtmetallguss-Bauteile, insbesondere Leichtmetallgussräder für Personenkraftwagen**
Production process for cast light-metal components, especially cast light-metal wheels for motor vehicles
Procédé de fabrication de pièces moulées en alliage léger particulièrement de jantes en alliage léger pour véhicules particuliers

(30) Priorität: 28.07.1987 DE 3724928
(43) Veröffentlichungstag der Anmeldung: 01.02.1989
(73) Patentinhaber: Bayerische Motoren Werke Aktiengesellschaft, 80788 München (DE)
(72) Erfinder: Dagustany, Amer, D-8000 München 40 (DE); Spriestersbach, Jochen, Dr., D-8508 Wendelstein (DE); Günther, Bernd, D-8046 Garching (DE); Knall, Gerhard, D-8000 München 60 (DE)

(56) Entgegenhaltungen:
- EP-A- 0 021 227
- DE-B- 1 169 682
- FR-A- 1 300 416
- FR-A- 2 319 445
- US-A- 3 856 360
- US-A- 4 576 791
- Deutsche Norm DIN 1725 (Febr. 1986) Teil 2 Seite 1-14
- Revue de l'Aluminium, Aug./Sept. 1981, S. 285-299
- DIN 1725; Afnor A57/702

## Beschreibung

Die Erfindung bezieht sich auf ein Herstell-Verfahren mit den Merkmalen gemäß dem Oberbegriff des Patentanspruches 1. Die bei der Herstellung derartiger PKW-Räder verwendete Legierung enthält möglichst geringe Anteile härtbarer Legierungsbestandteile, weil diese die Verformbarkeit bzw. Zähigkeit der Räder mindern. Eine solche zur Herstellung von Leichtmetallguß-Rädern für PKW geeignete Legierung ist GK-AlSi 11 (siehe Deutsche Norm DIN 1725 (Febr. 1986) Teil 2, Seite 5 und 11). Um jedoch die Wandstärke und das Gewicht der Räder weiter reduzieren zu können, besteht das Bedürfnis, sowohl die Festigkeit als auch die Zähigkeit zugleich zu verbessern oder zumindest die Verbesserung einer der beiden Eigenschaften zu erreichen.

Eine überraschend hohe Steigerung der Festigkeit ohne Reduzierung bzw. sogar mit gleichzeitig leichter Steigerung der Zähigkeit erreicht die Erfindung in zudem überraschend einfacher Weise durch die Anwendung der kennzeichnenden Merkmale des Patentanspruches 1 bei dem bekannten Herstell-Verfahren. Eine derart enge und niedrige Festlegung des Magnesium-Gehaltes und anderer härtbarer Bestandteile zusammen mit einem Abschreckhärten einer derartigen Legierung war bisher nicht als sinnvoll angesehen und daher nicht angewendet worden.

Ein weniger gezieltes Abkühlen ähnlich legierter Räder in Wasser unmittelbar nach dem Entnehmen aus der Kokille ist zwar zum Zweck eines anschließenden leichteren Handhabens bekannt, jedoch ohne gezielte und den Ergebnissen bei der Erfindung entsprechende Verbesserung der Festigkeit.

Bei Leichtmetallguß-Rädern für Personenkraftwagen wird durch das erfindungsgemäße Verfahren eine bis zu etwa vierfache Steigerung der dabei maßgebenden Umlauf-Biegewechselfestigkeit im Naben- und Radschüsselbereich bei zugleich bis zu 25%-Steigerung der Schlagzähigkeit am Felgenhorn erreicht, wenn beim Legieren und Abschrecken nach den Merkmalen des Anspruches 2 verfahren wird.

In Verbindung mit einer nach Anspruch 3 eng tolerierten Legierung führt die in den beiden genannten Bereichen aufgrund der unterschiedlichen Abkühl-Geschwindigkeit unterschiedliche Temperatur zum Abschreck-Zeitpunkt zu jeweils bestimmungsgemäß vorteilhafter Steigerung der Festigkeit einerseits und der Zähigkeit andererseits.

Wird beim Abgießen allein nach den Merkmalen des Patentanspruches 4 verfahren, so steigen Festigkeit und Zähigkeit in etwa gleichem Maße um etwa 50%. Die Kombination der Verfahrensschritte nach den Ansprüchen 1 und 3 mit denjenigen nach Anspruch 4 ergibt eine zusätzliche Steigerung zumindest der Zähigkeit von etwa 25% auf etwa 50%.

Die Verfahrensschritte nach den Merkmalen der Patentansprüche 5 und 6 vermeiden, daß nach dem Abschreck-Härten eine Rißbildung auslösende Spannung verbleibt. Praktische Untersuchungen haben zu dem gleichfalls überraschenden Ergebnis geführt, daß ein ausreichendes Warmauslagern allein schon durch die bei nicht abgeschreckten Rädern übliche Wärmebehandlung beim Trocknen während eines Lackierungsvorganges erreicht wird, so daß zusätzlicher Aufwand von Wärmeenergie für eine gesonderte Wärmebehandlung entfällt.

Bei einer Anwendung des erfindungsgemäßen Verfahrens wurden serienmäßige Leichtmetallguß-Räder für Personenkraftwagen der Abmessung 6 J × 14 aus der serienmäßig verwendeten Aluminium-Silizium-Gußlegierung GK-AlSi11/Sr-kf gemäß DIN 1725 Teil 2 und 5/02.86 im - außer dem Abschreck-Härten - gegenüber der Serienfertigung unveränderten Schwerkraft-Kokillengießverfahren hergestellt, und zwar mit folgenden mittels Spektralanalyse ermittelten Gewichtsprozent-Legierungsanteilen : Si 9,64 - Mg 0,08 - Fe 0,18 - Mn 0,01 - Ti 0,09 - Cu 0,00 - Zn 0,01 - Sr 0,025 sowie Spuren unter 0,01 von Ni, Pb, P, Ca, Na, Cr und B. Die Schmelze-Temperatur betrug beim Gießvorgang im Schmelzofen 740°C und im Warmhalteofen 710°C, die Abschrecktemperatur beim Entnehmen aus der Kokille und Eintauchen in Wasser von 25°C betrug im Nabenbereich 450°C und im Felgenhornbereich 375°C bei einer Abschreckzeit von etwa 3 bis 10 Sekunden. Anschließend erfolgte eine Abkühlung an Luft auf Umgebungstemperatur. Nach längerem Zeitabstand wurden die Räder im Naben- und Felgenhornbereich mechanisch bearbeitet sowie nach weiterem längeren Zeitabstand einer Oberflächenbehandlung mit Lackierung einschließlich einer Trockenzeit von etwa 20 Minuten bei einer gleichbleibenden Trocken-Temperatur von 190°C bei anschließendem Abkühlen an Luft unterzogen.

Die Dauerfestigkeitsmessung an einem Umlaufbiege-Prüfstand ergab aus 9 Rädern einen Mittelwert von nahezu 6 Mio. Lastwechsel gegenüber etwa 1 Mio. Lastwechsel bei Serien-Rädern ohne Abschrecken, jedoch sonst übereinstimmenden Werten des Herstellungsverfahrens. Die Schlagzähigkeit bzw. Duktilität wurde mit einem Durchschnittswert der Verformungsenergie von 500 bis 600 Joule gegenüber 400 bis 500 Joule an jeweils 4 Stellen jedes Rades ermittelt.

Bei einer weiteren beispielsweisen Anwendung des erfindungsgemäßen Verfahrens wurde bei im übrigen innerhalb engster Grenzen gleicher Verfahrensweise und gleicher Legierungszusammensetzung wie im ersten Beispiel ausschließlich die Schmelze-Temperatur im Schmelzofen auf höchstens 720°C und im Warmhalteofen auf höchstens 680°C abgesenkt, sowie, wie bei der Serienfertigung, ohne Abschreck-Härten verfahren. Bei den gleichfalls mit denjenigen zum ersten Beispiel übereinstimmenden Festigkeits- und Verformungs-Messungen wurde bei Mittelwerten aus wiederum 9 Rädern Steigerungen von etwa 1 auf 2 Mio. Lastwechsel bzw. von etwa 400 bis 500 Joule auf etwa 600 bis 700 Joule an jeweils 4 Stellen jedes Rades festgestellt.

## Patentansprüche

1. Herstell-Verfahren für Leichtmetallguß-Räder für Personenkraftwagen, wobei eine nah-eutektische veredelte AlSi-Legierung verwendet wird, die - neben Al - Gewichtsanteile von 9,5% bis 12,5% Silizium und Legierungsbestandteile wie max. 0,2% Eisen, max. 0,05% Mangan, max. 0,1% Titan, max. 0,03% Kupfer, max. 0,05% Zink sowie je höchstens 0,05 und in der Summe höchstens 0,15 sonstige Verunreinigungen enthält, und wobei die Räder nach dem Erstarren aus der Gießform entnommen und abgekühlt werden, dadurch gekennzeichnet, daß die Legierung mindestens 0,05 bis höchstens 0,15% Gewichtsanteile Magnesium enthält und daß die Räder von einer Temperatur - gemessen an deren Oberfläche - von mindestens 380°C an Innenbereichen bzw. Bereichen mit Massenkonzentration, wie Nabe und Schüssel von Rädern, unmittelbar beim Entnehmen aus der Gußform in Wasser abgeschreckt werden.

2. Verfahren nach Anspruch 1, zum Herstellen von Leichtmetallguß-Rädern mit dünnwandigen schlagzähen Felgenhorn-Bereichen, dadurch gekennzeichnet, daß die Räder mit einer Temperatur von unter 400°C an den dünnwandigen Bereichen abgeschreckt werden.

3. Verfahren nach Anspruch 1 oder 2 zum Herstellen von Leichtmetallguß-Rädern, dadurch gekennzeichnet, daß die Legierung Gewichtsanteile in % von jeweils höchstens 10,5 Si, 0,1 Mg, 0,2 Fe, 0,05 Mn, 0,1 Ti und 0,05 Zn enthält, daß eine Strontium-Veredelung mit etwa 0,025% Sr und eine Kornfeinungsbehandlung mit etwa 0,1% einer Aluminium-Titan-Vorlegierung AlTi₅B₁ angewendet werden und daß die Räder bei einer Temperatur von etwa 400 bis 500°C im Nabenbereich und von - durch örtlich höhere Wärme-Ableitung bedingt - bei einer Temperatur von etwa 325°C bis 375°C im Felgenhombereich abgeschreckt werden.

4. Verfahren nach einem der vorangegangenen Ansprüche, dadurch gekennzeichnet, daß die Räder bei einer Schmelze-Temperatur im Schmelzofen von höchstens 720°C und im Warmhalteofen von höchstens 680°C gegossen werden.

5. Verfahren nach einem der Ansprüche 1 bis 4, dadurch gekennzeichnet, daß die Räder im weiteren Herstellungsablauf einer Warmauslagerung bzw. einem Warmentspannen ausgesetzt werden.

6. Verfahren nach Anspruch 5, dadurch gekennzeichnet, daß die Räder in üblicher Weise bei einer Oberflächen-Beschichtung, insbesondere beim Lackieren, einem Trockenvorgang als Warmauslagerung bzw. Warmentspannen bei etwa 190°C und mit einer Zeitdauer von etwa 20 Minuten ausgesetzt werden.

## Claims

1. A production process for cast light-metal wheels for passenger vehicles, wherein a near-eutectic refined AlSi-alloy is used, which - in addition to Al - contains parts by weight of 9.5% to 12.5% silicon and alloy components such as a maximum of 0.2% iron, a maximum of 0.05% manganese, a maximum of 0.1% titanium, a maximum of 0.03% copper, a maximum of 0.05% zinc and also in each case a maximum of 0.05 and in total a maximum of 0.15 of other impurities, and in which the wheels, after solidifying, are removed from the casting mould and are cooled, characterised in that the alloy contains at least 0.05 to a maximum of 0.15% by weight of magnesium and that the wheels from a temperature - measured on their surface - of at least 380°C on internal regions or, respectively, regions with bulk concentrations, such as the hub and dish of wheels, are quenched in water immediately on removal from the casting mould.

2. A process according to Claim 1 for the production of cast light-metal wheels with thin-walled wheel flange regions which are tough with respect to impact, characterised in that the wheels are quenched with a temperature of below 400°C on the thin-walled regions.

3. A process according to Claim 1 or 2 for the production of cast light-metal wheels, characterised in that the alloy contains parts by weight in % of, respectively, a maximum of 10.5 Si, 0.1 Mg, 0.2 Fe, 0.05 Mn, 0.1 Ti and 0.05 Zn, that a strontium purification with approximately 0.025% Sr and a grain refining treatment with approximately 0.1% of an aluminium-titanium pre-alloy AlTi₅B₁ are applied, and that the wheels are quenched at a temperature of approximately-400 to 500°C in the hub regions and - due to locally higher carrying-off of heat - a temperature of approximately 325°C to 375°C in the wheel flange region.

4. A process according to any one of the preceding claims, characterised in that the wheels are cast at a melt temperature in the melting furnace of a maximum of 720°C and in the holding furnace of a maximum of 680°C.

5. A process according to any one of Claims 1 to 4, characterised in that the wheels are exposed to a thermal adsorption or, respectively, thermal stress-relief in the further production cycle.

6. A process according to Claim 5, characterised in that the wheels are exposed to a drying process in a conventional manner during a surface coating, in particular during lacquering, as thermal adsorption or, respectively, thermal stress-relief at approximately 190°C and for a period of approximately 20 minutes.

## Revendications

1. Procédé de fabrication de jantes moulées en alliage léger pour des voitures particulières, procédé dans lequel on utilise un alliage purifié AlSi presque eutectique, qui à côté de l'aluminium a des teneurs en poids de 9,5 % à 12,5 % de silicium et d'autres constituants d'alliages tels qu'un maximum de 0,2 % de fer un maximum de 0,05 % de manganèse, un maximum de 0,1 % de titane, un maximum de 0,03 % de cuivre, un maximum de 0,05 % de zinc, ainsi que d'autres impuretés pouvant atteindre chacune une teneur de 0,05 %, tandis que leur totalité présente un maximum de 0,15 %, tandis que les pièces sont extraites du moule de coulée après leur solidification et trempe,
caractérisé en ce que
l'alliage contient au moins 0,05 % et au plus 0,15 % en poids de magnésium et,
- les jantes, à partir d'une température mesurée sur leur surface, d'au moins 380°C dans les zones internes ou bien les zones présentant une concentration de masse, telles que le moyeu et le bord de jante des roues, sont immédiatement trempées dans l'eau lorsqu'elles sont extraites du moule de coulée.

2. Procédé selon la revendication 1, pour fabriquer des roues coulées en métal léger avec des zones de bord de jante résiliantes à parois minces,
caractérisé en ce que
les jantes sont trempées à une température inférieure à 400°C dans les zones à parois minces.

3. Procédé selon la revendication 1 ou la revendication 2 pour la fabrication de jantes coulées en alliage léger,
caractérisé en ce que
l'alliage contient des pourcentages en poids de respectivement au plus 10,5 Si, 0,1 Mg, 0,2 Fe, 0,05 Mn, 0,1 Ti et 0,05 Zn, en ce qu'on utilise une préparation de strontium avec environ 0,025 % de Sr et un traitement d'affinement de grains avec à peu près 0,1 % d'un pré-alliage aluminium-titane AlTi₅B₁, et que les roues sont trempées à une température d'environ 400 à 500°C dans la zone du moyeu et d'environ 325°C à 375°C dans la zone du bord de jante, du fait de l'évacuation de chaleur plus élevée à cet endroit.

4. Procédé selon une des revendications précédentes,
caractérisé en ce que
les jantes sont coulées à une température de fusion dans le four de fusion d'au plus 720°C et dans le four de maintien de la température d'au plus 680°C.

5. Procédé selon une des revendications 1 à 4,
caractérisé en ce que
les pièces ou bien les roues au cours du déroulement ultérieur de la fabrication sont soumises à un durcissement à chaud ou bien à une détente à chaud.

6. Procédé selon la revendication 5,
caractérisé en ce que
les jantes sont soumises de la façon habituelle, lors d'un traitement de surface notamment pour la peinture, à un processus de séchage jouant le rôle de durcissement à chaud ou bien de détente à chaud à environ 190°C, et avec une durée d'environ 20 minutes.
